# EUROPEAN PATENT SPECIFICATION

(11) **EP 0 925 184 B1**
(45) Date of publication and mention of the grant of the patent: **01.03.2000**
(21) Application number: 98906992.7
(22) Date of filing: 26.02.1998
(51) Int. Cl.: B32B 27/12, B65D 81/26

(54) **ABSORBENT PAD**
ABSORBIERENDES KISSEN
NAPPERON ABSORBANT

(30) Priority: 28.02.1997 GB 9704226; 02.09.1997 GB 9718731
(43) Date of publication of application: 30.06.1999
(73) Proprietor: Dyecor Limited, Horndean, Hampshire PO8 9JU (GB)
(72) Inventor: DAVIDSON, Roderick Iain, Petersfield, Hampshire GU32 3HG (GB); HALL, Robert Sinclair, Horndean, Hampshire PO8 9JU (GB)
(74) Representative: Brooks, Nigel Samuel
(86) International application number: GB9800449
(87) International publication number: WO9838040

(56) References cited:
- EP-A- 0 320 314
- WO-A-89/10084
- WO-A-89/10109
- WO-A-90/03320
- WO-A-91/01217
- WO-A-92/04254

## Description

The present invention relates to an absorbent pad, particularly though not exclusively for use in food trays.

It is established practice to display meat for sale in covered trays having a pad for absorbing blood from the meat. Normally such pads are formed of an absorbent material with a top release layer, which prevents direct contact between the meat and the absorbent material and allows easy separation of the meat from the pad.

So called "super-absorbent" materials are known, which absorb many times their dry weight of water. They are based on sodium acrylate copolymer. They are available from Technical Absorbents Ltd. of Grimsby in England.

It is know to form webs by the "air laid" process on equipment from Dan-Webforming A/S of Risskov in Denmark. Such webs usually incorporate synthetic fibres, which soften under heat in the process and bond together with other fibres in the web.

The object of the present invention is to provide an improved absorbent pad.

In accordance with a first aspect of the invention there is provided an absorbent pad material comprising:
a backing;
an air laid web on the backing, the web incorporating super-absorbent material in fibrous form and bonding synthetic fibre, the web being united together and secured to the backing by the bonding synthetic fibre; and
a plastics material release layer on the side of the web opposite from the backing,
wherein the plastics material of the release layer is based on a polymer having a melting point which is higher than that of at least a surface layer of the bonding synthetic fibre, whereby in use the air laid web can be heat bonded together in a compressed structure peripherally of a pad to be cut from the pad material by application of heated members to the backing and/or the release layer.

Preferably the synthetic fibre of the web is a bicomponent polymer of a polypropylene fibre with a polyethylene coating.

The plastics material release layer is preferably a polypropylene based material, which has a higher melting point than polyethylene. Use of this material enables adequate softening of the polyethylene coating of the polypropylene, and hence satisfactory sealing of the edges, without softening of the release layer and without its adherence to the heat bonding members . Alternatively, the release layer can be a coextrusion of high and low density polyethylene, with the low density side in contact with the web. Alternatively again, a double laminate of PET or polypropylene with polyethylene may be used. The release layer may be printed on its inside, that is its side in contact with the air laid web.

Normally, the backing will be a synthetic non-woven tissue.

Preferably, the release layer is bonded to the air laid web, having been laminated onto the web as the web is being laid. The lamination provides good bonding and integrity of the pad in use, when it swells in thickness with absorbed water.

Preferably, the air laid web includes wood pulp fibre to improve the texture and cost of the web. Insofar as the wood pulp fibre is least likely to be bonded to other fibres, it is likely to escape at the edges in the absence of peripheral heat-bonding compression. The super-absorbent material also may shed in the absence of peripheral compression.

According to a second aspect of the invention, there is provided an absorbent pad of sheet material comprising:
a backing layer;
an air laid web layer on the backing, the web incorporating super-absorbent material in fibrous form and bonding synthetic fibre, the web being united together and secured to the backing by the bonding synthetic fibre; and
a plastics material release layer on the side of the web opposite from the backing, the plastics material of the release layer being based on a polymer having a melting point which is higher than that of at least a surface layer of the bonding synthetic fibre;
wherein, at the edges of the pad, the three layers are compressed to a state thinner than that of the rest of the pad, with the material of the air lad web being bonded together in a compressed structure, at least at the edges of the pad, whereby fibres of the web are captivated at the edges.

According to a third aspect of the invention, there is provided an absorbent pad cut from a sheet of material comprising:
a backing;
an air laid web on the backing, the web incorporating super-absorbent material in fibrous form and bonding synthetic fibre the web being united together and secured to the backing by the bonding synthetic fibre; and
a plastics material release layer laminated onto the side of the web opposite from the backing, the plastics material of the release layer being based on a polymer having a melting point which is higher than that of at least a surface layer of the bonding synthetic fibre;
wherein, at the edges of the pad, the three layers of the pad, i.e. the backing, the air laid web and the release layer, are compressed to a state thinner than that of the rest of the pad, with the material of the air lad web being bonded together in a compressed structure, at least at the cut edges of the pad, whereby fibres of the web are captivated at the cut edges.

The backing, the air laid web and the release layer can be additionally sealed together in other areas of the pad, to show a logo for instance.

Preferably, the ratio of thickness of the rest of the pad to the compressed edges is between 9:1 and 2:1 and normally between 7:1 and 3:1.

According to a fourth aspect of the invention, there is provided a method of manufacturing absorbent pads of the invention, the method consisting in the steps of:
heating bondingly compressing a sheet of the absorbent pad material by application of heated members to the backing and/or the release layer in strips to define absorbent pads wherein fibres of the web are captivated, and
cutting the sheet to form the pads.

Preferably, the pads are cut centrally of compressed strips, whereby the compression remains intact in both adjacent cut pads. The strips can be heat sealingly compressed by means of heated rollers rolled over the laminated web. Alternatively, the strips are heat sealingly compressed by means of heated dyes impressed into the laminated web.

Where the width of the sheet is a multiple of the cut size of the pads, the sheet can be compressed at edges of the sheet corresponding to edges of the pads and the sheet cut widthwise and lengthwise between the pads. Where the width of the sheet is equal to the cut size of the pads, the sheet can be compressed at edges of the sheet corresponding to edges of the pads and the sheet cut widthwise between the pads. Again where the width of the sheet is greater than a multiple of the cut size of the pads, the sheet can be compressed at edges of the sheet corresponding to edges of the pads and the sheet cut widthwise between the pads and lengthwise between the pads and at the edges of the pads along the length of the sheet.

It is convenient in certain applications to prepare the pads from rolls of the laminated pad material which are delivered in bulk to a factory where the pads placed into trays immediately after cutting. Thus in accordance with a particular feature of the invention, the method includes the step of placing and securing cut pads in trays.

According to a fifth aspect of the invention there is provided a machine for manufacturing absorbent pads of the invention from a sheet of absorbent pad material of the invention, the machine comprising:
means for successively feeding the said sheet,
means for compressing the sheet at strips to define the pads by heat bonding the material of the air laid web, and
means for cutting the sheet at the strips.

Preferably the heat bonding compression means comprises a pair of heated platens having raised compression lands for defining the said strips and means for successively advancing the platens together for impressing the lands against the said sheet to heat bondingly compress the air laid web.

To help understanding of the invention, specific embodiments thereof will now be described by way of example and with reference to the accompanying drawings, in which:
Figure 1 is a perspective view of a pad of the invention;
Figure 2 is an end view of the pad;
Figure 3 is a diagrammatic side view of production of a three part laminate for pad production;
Figure 4 is a diagrammatic side view of a machine for making the pad;
Figure 5 is a similar view of another pad making machine;
Figure 6 is a front view of one of the heat sealing platens of the machine of Figure 5;
Figure 7 is a diagrammatic side view of a third pad making machine;
Figure 8 is an end view of the third pad making machine; and
Figure 9 is a diagrammatic side view of a machine for cutting individual pads and inserting them into trays.

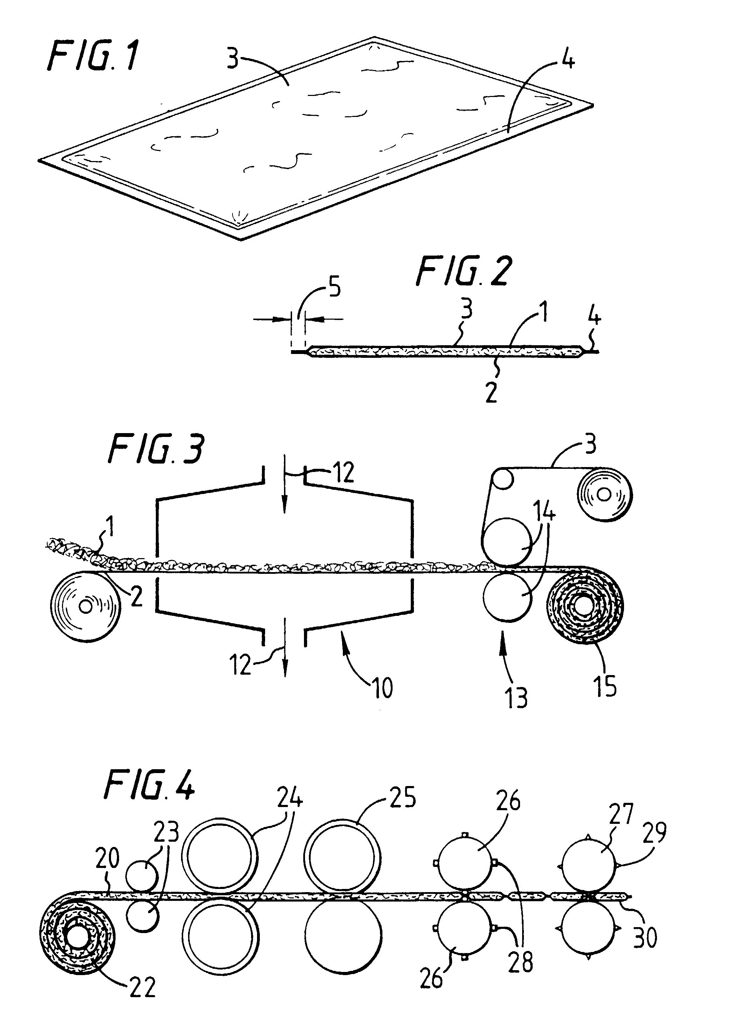

The pad shown in Figures 1 & 2 has a core 1 of an air laid web consisting of
52% of wood pulp fibre,
30% of super-absorbent fibre,
18% of thermoplastic bonding material.
The super-absorbent fibre is 6mm long fibre sold under the OASIS trade mark by Technical Absorbents Ltd. The bonding material is polyethylene coated polypropylene fibre sold by Danaklon A/S of Varde in Denmark.

The web is laid on a non-woven polyethylene tissue 2 and is coated with a release layer film 3 of polypropylene based material, suitably SWF film as sold under the TRESPAPHAN trade mark by Hoechst Trespaphan UK Ltd of Swindon. The material is corona discharge treated whereby it can be printed, on the side which is laminated to the air laid web, prior to the lamination. The printing is then visible through the film 3.

The edges 4 of the pad are compressed, typically along a 3mm wide margin 5, with the web being flattened and heat bonded in its compressed state, with the backing and release layers united to it. This compression of the air laid web captivates fibres of the web from escaping from the cut edges. Tests have shown this to be the case.

In use, the pad is secured in a meat tray, with the release layer uppermost. This avoids the meat sticking to the pad. Blood from the meat can flow around the edges of the pad and pass through the non-woven tissue to be absorbed into the web.

Figure 3 shows in outline a machine for manufacturing the material from which pad of Figures 1 & 2 is made. In the machine, the tissue layer 2 has the web layer 1 laid on it at forming station 10. These conformed layers are advanced into a processing station 11, were hot air 12 is sucked through the layers, drawing the air laid web 1 to a uniform thickness and softening the polyethylene of the bonding material, which acts as an adhesive to unite the web layer and secure it to the backing. At a lamination station 13 immediately down stream of the processing station, the release film 3 is laminated by rollers 14 onto the still hot web, whereby the three layers are united at their place of lamination. Air laying is a known technology and need not be described in detail. The lamination of the release film 3 is an additional step. Downstream of the lamination, the material is cooled and wound 15.

Figure 4 shows diagrammatically one form of machine for manufacturing pads. This process is generally carried out at a site separate from the air laying and lamination. However, it could be carried out on the same site. The pad material 20 drawn from a roll 22 and fed by rollers 23 to a set of heated, longitudinal compression rollers 24 for forming sealing lines longitudinally of the material. These are lines where the rollers heat the air laid web sufficiently to again soften the polyethylene of the bonding material and cause it to hold the web in compressed state. Typically a 1.0-1.5mm material is compressed to 0.3mm. (It will be appreciated that the material is so easily compressible that its free, uncompressed dimension is not easy to measure.) A set of slitting rollers 25 follows the compression rollers 24 for dividing the material into strips of a width equal to the end product. There then follow a further pair of lateral sealing and cutting rollers 26,27, having laterally extending, heated, compression elements 28 and cutting elements 29 for cutting off the individual pads 30.

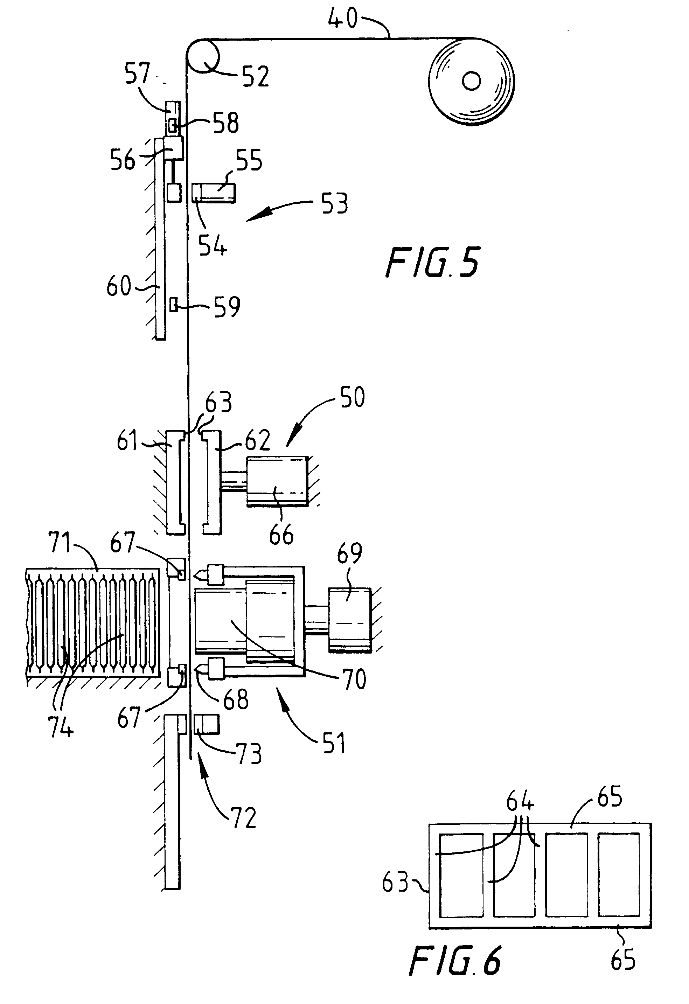

Figure 5 shows another machine, in which reciprocating compression and cutting stations 50,51 are employed. The pad material 40 is fed over a jockey roller 52 to a pneumatic feeding device 53, which comprises a clamp 54 and its actuator 55, which are connected to an advance bar 56 via short stroke actuators 57, a pair of which are provided at opposite end of the bar 56 corresponding to opposite sides of the material. The bar is movable vertically between stops 58,59 by a long stroke actuator 60. The clamp holds the material vertically and the feeding device is thus arranged to feed the material vertically downwards. Beneath the feeding device, an opposed pair of heated platens 61,62 are provided. These have lands 63 which define regions of compression of the material, the regions being a plurality of vertically arranged strips 64, with top and bottom horizontal strips 65, which together define the edges of a plurality of pads side by side. Typically the pads are 9.5 x 15.0mm, with the strips 64,65 being 0.5mm wide. One platen 61 is fixed and the other is reciprocatably mounted for movement towards and away from the other by a hydraulic actuator 66.

Beneath the platens a cutter is provided in the form of a fixed array of anvil strips 67 laid out in the pattern of the lands 63 and a reciprocatable array of knives 68, also in the same pattern. A further hydraulic actuator 69 is provided for moving the knives. Within each pad area defined by the knives, a pneumatically operated pusher 70 is provided for pushing cut pads into reception trays 71. Beneath this cutter, a waste feeder 72 is provided with jaws 73 for gripping wasted left at the edges of the material.

In operation, the actuators 66,69 are cycled together. The material is then fed by the feeders 53, 72 and the actuators recycled and so on. The material has a tendency to adhere to the platens when the actuator 66 is cycled. To pull it off, the short stroke actuators 57 draw up the clamp 54 before the long stroke actuators 60 feed the material down between the platens. The material with the previously compressed strips 64,65 is moved down to register with the knives 68, which are advanced to cut as the platens impress fresh strips above. Immediately on operation of the knives, the pushers 70 feed the cut pads into the trays 71, where lines 74 of pads accumulate for packing and distribution. The waste material is pulled down from the cutters by the feeder 72 in synchronisation with the long stroke actuator 60. All the feed devices return to their initial position during the operation of the actuators 66,69.

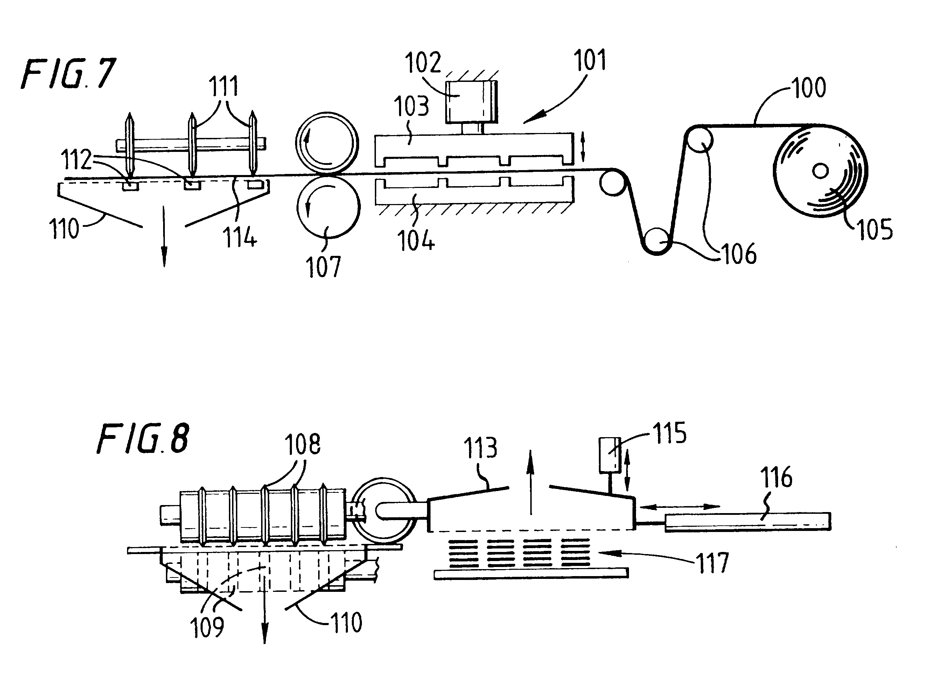

Turning now to Figures 7 & 8 a larger machine in there shown. It comprises a compression device 101 having an actuator 102 and platens 103,104 arranged to impress strips defining pad in an array extending both across and along the pad material 100, which is fed from a roll 105 via a tensioning rollers 106. Between cycles of the compression device, the material is advanced by nip rollers 107, which incorporate in their length upper, circular slitting cutters 108 and lower anvil discs 109, whereby the material is fed onto a suction table 110 already slit longitudinally into pad widths and having a rectangular array of pad edge strips impressed into it. For separation of the pads widthwise of the material, the material is held by suction onto the table 110 and further circular slitting cutters 111 rolled across the table in line with anvil strips 112 set in it. At the end of this cutting stroke, a suction head 113 is in register with the cut pads 114. The head 113 is lowered by an actuator 115 onto the pads. The suction of the table 110 is released and that of the head applied. The head is lifted by actuator 115 and returned by a long stroke actuator 116 to its initial position, where release of the suction deposits the pads on a stack 117.

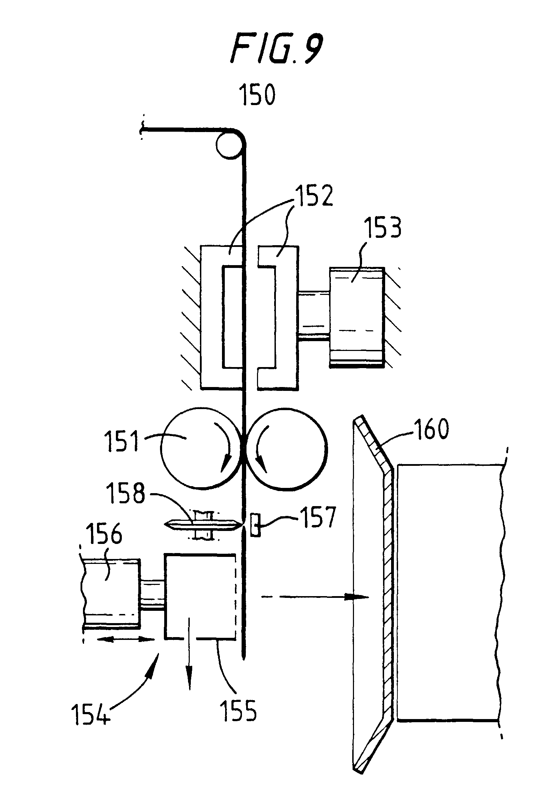

A pad making device is shown in Figure 9. Its reel of pad material 150 is one pad wide. The material is fed by feed rollers 151 through a pair of single pad, impression platens 152, with an actuator 153. Beneath the rollers, the strip-impressed material hangs down in front of a pad applicator device 154, in the form of a suction head 155, on an actuator 156. Above the actuator, an anvil strip 157 and laterally movable circular slitting cutter 158 are provided. On cycling of the impression platens 152, the material is pulled down by the rollers and the pad 159 aligns with the suction head. Suction is applied and the cutter is operated. The actuator is then advanced, to apply the pad to a meat tray 160, which has been presented by another machine in front of the actuator. The tray has already had adhesive applied to, whereby the actuator causes the pad to adhere to the tray, when the suction is released and the actuator withdrawn. As an alternative to use of adhesive, the pads can be ultrasonically welded in place after placement.

Whilst it is envisaged that the primary use of the pads will be in meat trays, they or indeed sealed but uncut sheets of them may find use in providing a convenient means of holding water against perishable goods which are frozen. The pads freeze and assist in maintaining the goods at or below freezing point. The pads have particular advantage in being flat and able to take up moisture very quickly. This enables them to be used after freezing to line a container of frozen food. In another use, they can be shaped to contact the food and then frozen.

## Claims

1. An absorbent pad material comprising:
a backing (2);
an air laid web (1) on the backing, the web (1) incorporating super-absorbent material in fibrous form and bonding synthetic fibre, and the web (1) being united together and secured to the backing (2) by the bonding synthetic fibre; and
a plastics material release layer (3) on the side of the web (1) opposite from the backing (2),
wherein the plastics material of the release layer (3) is based on a polymer having a melting point which is higher than that of at least a surface layer of the bonding synthetic fibre, whereby in use the air laid web (1) can be heat bonded together in a compressed structure peripherally of a pad to be cut from the pad material by application of heated members to the backing and/or the release layer.

2. An absorbent pad material as claimed in claim 1, characterised in that the bonding synthetic fibre of the web (1) is a polypropylene fibre with a polyethylene coating.

3. An absorbent pad material as claimed in claim 1 or claim 2, characterised in that the plastics material release layer (3) is:
• a polypropylene based material, or
• a coextrusion of high and low density polyethylene, with the low density side in contact with the web, or
• a double laminate of PET or polypropylene with polyethylene.

4. An absorbent pad material as claimed in any preceding claim, characterised in that the release layer (3) is printed on its inside, that is its side in contact with the air laid web (1).

5. An absorbent pad material as claimed in any preceding claim, characterised in that the backing (2) is a synthetic non-woven tissue.

6. An absorbent pad material as claimed in any preceding claim, characterised in that the release layer (3) is bonded to the air laid web (1), having been laminated onto the web as the web is being laid.

7. An absorbent pad material as claimed in any preceding claim, characterised in that the air laid web (1) includes wood pulp fibre.

8. An absorbent pad of sheet material comprising:
a backing layer (2);
an air laid web layer (1) on the backing (2), the web (1) incorporating super-absorbent material in fibrous form and bonding synthetic fibre, and the web (1) being united together and secured to the backing (2) by the bonding synthetic fibre; and
a plastics material release layer (3) on the side of the web (1) opposite from the backing (2), the plastics material of the release layer (3) being based on a polymer having a melting point which is higher than that of at least a surface layer of the bonding synthetic fibre;
wherein, at the edges of the pad, the three layers (2,1,3) are compressed to a state thinner than that of the rest of the pad, with the material of the air lad web being bonded together in a compressed structure, at least at the edges (4) of the pad, whereby fibres of the web are captivated at the edges.

9. An absorbent pad cut from a sheet of material comprising:
a backing (2);
an air laid web (1) on the backing (2), the web (1) incorporating super-absorbent material in fibrous form and bonding synthetic fibre, and the web (1) being united together and secured to the backing by the bonding synthetic fibre; and
a plastics material release layer (3) laminated onto the side of the web (1) opposite from the backing (2), the plastics material of the release layer (3) being based on a polymer having a melting point which is higher than that of at least a surface layer of the bonding synthetic fibre;
wherein, at the edges of the pad, the three layers are compressed to a state thinner than that of the rest of the pad, with the material of the air lad web (1) being bonded together in a compressed structure, at least at the cut edges (4) of the pad, whereby fibres of the web are captivated at the cut edges.

10. An absorbent pad as claimed in claim 8 or claim 9, characterised in that the backing(2), the air laid web (1) and the release layer (3) are additionally sealed together in other areas of the pad.

11. An absorbent pad as claimed in claim 8, claim 9 or claim 10, characterised in that the ratio of thickness of the rest of the pad to the compressed edges (4) is between 9:1 and 2:1 and preferably between 7:1 and 3:1.

12. An absorbent pad as claimed in any one of claims 8 to 11, characterised in that the bonding synthetic fibre of the web is a polypropylene fibre with a polyethylene coating.

13. An absorbent pad as claimed in any one of claims 8 to 12, characterised in that the plastics material release layer (3) is:
• a polypropylene based material, or
• a coextrusion of high and low density polyethylene, with the low density side in contact with the web, or
• a double laminate of PET or polypropylene with polyethylene.

14. An absorbent pad as claimed in any one of claims 8 to 13 characterised in that the release layer (3) is printed on its inside, that is its side in contact with the air laid web (1).

15. An absorbent pad as claimed in any one of claims 8 to 14 characterised in that the backing (2) is a synthetic non-woven tissue.

16. An absorbent pad as claimed in any one of claims 8 to 15, characterised in that the release layer (3) is bonded to the air laid web (1), having been laminated onto the web as the web is being laid.

17. An absorbent pad as claimed in any one of claims 8 to 16, characterised in that the air laid web includes wood pulp fibre.

18. A method of manufacturing absorbent pads as claimed in any one of claims 8 to 17 from a pad material as claimed in any one of claims 1 to 7, the method consisting in the steps of:
heat bondingly compressing a sheet of the absorbent pad material (20, 40, 100, 150) by application of heated members (28, 61,62, 103,104, 152) to the backing and/or the release layer in strips to define absorbent pads (30, 74, 117, 159) wherein fibres of the web are captivated, and
cutting the sheet to form the pads (30, 74, 117, 159).

19. A method of manufacturing absorbent pads as claimed in claim 18, characterised in that the pads are cut centrally of compressed strips (5), whereby the compression remains intact in both adjacent cut pads.

20. A method of manufacturing absorbent pads as claimed in claim 18 or claim 19, characterised in that the strips are heat sealingly compressed by means of heated rollers (26) rolled over the laminated web or by means of heated dyes (61,62, 103,104, 152) impressed into the laminated web.

21. A method of manufacturing absorbent pads as claimed in any one of claim 18 to 20, characterised in that the width of the sheet (40,100) is a multiple of the cut size of the pads (74,117), the sheet is compressed at edges of the sheet corresponding to edges of the pads and the sheet is cut widthwise and lengthwise between the pads.

22. A method of manufacturing absorbent pads as claimed in any one of claim 18 to 20, characterised in that the width of the sheet (150) is equal to the cut size of the pads (159), the sheet is compressed at edges of the sheet corresponding to edges of the pads and the sheet is cut widthwise between the pads.

23. A method of manufacturing absorbent pads as claimed in any one of claim 18 to 20, characterised in that the width of the sheet is greater than a multiple of the cut size of the pads, the sheet is compressed at edges of the sheet corresponding to edges of the pads and the sheet is cut widthwise between the pads and lengthwise between the pads and at the edges of the pads along the length of the sheet.

24. A method of manufacture as claimed in any one of claims 18 to 23, including the step of placing and securing cut pads in trays (160).

25. A machine for manufacturing absorbent pads as claimed in either of claims 8 and 9 from a sheet of absorbent pad material as claimed in claim 1, the machine comprising:
means (23, 53, 107,151) for successively feeding the said sheet,
means (28, 61,62, 103,104, 152) for compressing the sheet at strips to define the pads by heat bonding the material of the air laid web, and
means (29, 68, 108, 111, 158) for cutting the sheet at the strips.

26. A machine as claimed in claim 25, characterised in that the heat bonding compression means comprises a pair of heated platens (61,62, 103,104, 152) having raised compression lands (63) for defining the said strips and means (66, 102, 153) for successively advancing the platens together for impressing the lands against the said sheet to heat bondingly compress the air laid web.

27. A machine as claimed in claim 25 or claim 26, characterised in that the feeding means is a pair of driven rollers (107, 151) between the nip of which the sheet passes downstream of the platens.

28. A machine as claimed in claim 25 or claim 26, characterised in that the feeding means is a pair of jaws (54) closable against the sheet and means (55) for moving the jaws towards the platens.

29. A machine as claimed in claim 28, characterised in that the moving means includes means (57) for moving the jaws slightly away from the platens with the sheet before moving them forward again to release the sheet from the platens.

30. A machine as claimed in any one of claims 25 to 29, characterised in that the cutting means comprises a set of longitudinal knife blades (68) advanceable into the material against an anvil plate (67).

31. A machine as claimed in claim 30, characterised in that the anvil has cut-outs and the machine includes plungers (70) for pushing the cut pads through the cut-outs.

32. A machine as claimed in any one of claims 25 to 29, characterised in that the cutting means comprises at least one rolling knife (108) advanceable across the sheet against an anvil (109).

33. A machine as claimed in claim 32, including a vacuum plate (110), at least one second rolling knife (111) and anvil (112) for cutting the sheet transversely and means (113,115,116) for transferring the cut pads from the vacuum plate, the transfer means preferably being a second plate.

34. A machine as claimed in claim 31, the machine including:
means (155) for placing cut pads in trays, and
means for securing the pads into the trays.

## Patentansprüche

1. Absorbierkissen-Material mit:
einem Träger (2) ;
einer air-laid Fasermatte (1) auf dem Träger, wobei die Fasermatte (1) super-absorbierendes Material in Faserform und synthetische Bindefaser enthält und die Fasermatte (1) mittels der synthetischen Bindefasern gebunden und an dem Träger (2) befestigt ist; und
einer Kunststoffmaterial-Trennschicht (3) an der von dem Träger (2) abgewandten Seite der Fasermatte (1),
wobei das Kunststoffmaterial der Trennschicht (3) als Basis ein Polymer mit einem Schmelzpunkt aufweist, der höher ist als derjenige zumindest einer Oberflächenschicht der synthetischen Bindefaser, wobei im Gebrauch die air-laid Fasermatte(1)durch Applizieren aufgeheizter Bauelemente an dem Träger und/oder der Trennschicht zu einem am Umfang komprimierten Gefüge heiß zusammengefügt werden kann, um von dem Kissenmaterial abgeschnitten zu werden.

2. Absorbierkissen-Material nach Anspruch 1, **dadurch gekennzeichnet,** daß die synthetische Bindefaser der Fasermatte (1) eine Polypropylen-Faser mit einer Polyethylenbeschichtung ist.

3. Absorbierkissen-Material nach Anspruch 1 oder 2, **dadurch gekennzeichnet,** daß die Kunststoffmaterial-Trennschicht (3) ist:
• ein auf Polypropylen basierendes Material, oder
• eine Koextrusion aus Polyethylen hoher Dichte und Polyethylen niedriger Dichte, mit der Seite niedriger Dichte in Kontakt mit der Fasermatte, oder
• ein Doppellaminat aus PET oder Polypropylen mit Polyethylen.

4. Absorbierkissen-Material nach einem der vorhergehenden Ansprüche, **dadurch gekennzeichnet,** daß die Trennschicht (3) an ihrer Innenseite, d.h. ihrer in Kontakt mit der air-laid Fasermatte (1) befindlichen Seite, bedruckt ist.

5. Absorbierkissen-Material nach einem der vorhergehenden Ansprüche, **dadurch gekennzeichnet,** daß der Träger (2) ein nicht gewebter Tissuestoff ist.

6. Absorberkissen-Material nach einem der vorhergehenden Ansprüche, **dadurch gekennzeichnet,** daß die Trennschicht (3) mit der air-laid Fasermatte (1) verbunden ist, wobei sie auf die Fasermatte auflaminiert wurde, während diese aufgebracht wird.

7. Absorberkissen-Material nach einem der vorhergehenden Ansprüche, **dadurch gekennzeichnet,** daß die air-laid Fasermatte (1) Zellstoff-Fasern enthält.

8. Absorbierkissen aus flächigem Material, mit:
einer Trägerschicht (2);
einer air-laid Fasermattenschicht (1) auf dem Träger (2), wobei die Fasermatte (1) super-absorbierendes Material in faseriger Form und synthetische Bindefasern enthält und die Fasermatte (1) mittels der synthetischen Bindefaser gebunden und an dem Träger (2) befestigt ist; und
einer Kunststoffmaterial-Trennschicht (3) auf der von dem Träger (2) abgewandten Seite der Fasermatte (1), wobei das Kunststoffmaterial der Trennschicht (3) auf einem Polymer basiert, das einen Schmelzpunkt aufweist, der höher als derjenige von zumindest einer Oberflächenschicht der synthetischen Bindefaser ist;
wobei die drei Schichten (2,1,3) des Kissens an seinen Rändern zu einem Zustand komprimiert sind, der dünner ist als derjenige des Restes des Kissens, wobei das Material der air-laid Fasermatte zumindest an den Rändern (4) des Kissens zu einem komprimierten Gefüge zusammengefügt ist, so daß Fasern der Fasermatte an den Schneidrändern festgehalten sind.

9. Ein Absorbierkissen, abgeschnitten von einem Materialstreifen, mit:
einem Träger (2);
einer air-laid Fasermatte (1) auf dem Träger (2), wobei die Fasermatte (1) super-absorbierendes Material in faserartiger Form und synthetische Bindefasern enthält und die Fasermatte (1) mittels der synthetischen Bindefaser zusammengefügt und an dem Träger befestigt ist; und
einer Kunststoffmaterial-Trennschicht (3), die auf die von dem Träger (2) abgewandte Seite der Fasermatte (1) laminiert ist, wobei das Kunststoffmaterial der Trennschicht (3) auf einem Polymer basiert, das einen Schmelzpunkt aufweist, der höher ist als derjenige zumindest einer Oberflächenschicht der synthetischen Bindefaser;
worin die drei Schichten an den Rändern des Kissens zu einem Zustand komprimiert sind, der dünner ist als derjenige des Restes des Kissens, und wobei das Material der air-laid Fasermatte (1) zumindest an den Schneidrändern (4) des Kissens zu einem komprimierten Zustand zusammengefügt ist, so daß die Fasern der Fasermatte an den Schneidrändern festgehalten sind.

10. Absorbierkissen nach Anspruch 8 oder 9, dadurch gekennzeichnet, daß der Träger (2), die air-laid Fasermatte (1) und die Trennschicht (3) in anderen Bereichen des Kissens zusätzlich gesiegelt sind.

11. Absorberkissen nach Anspruch 8, 9 oder 10, **dadurch gekennzeichnet**, **daß** das Dickenverhältnis des Restes des Kissens zu den komprimierten Rändern (4) zwischen 9:1 und 2:1 und vorzugsweise zwischen 7:1 und 3:1 liegt.

12. Absorberkissen nach einem der Ansprüche 8 bis 11, **dadurch gekennzeichnet, daß** die synthetische Bindefaser der Fasermatte eine Polypropylenfaser mit einer Polyethylenschicht ist.

13. Absorbierkissen nach einem der Ansprüche 8 bis 12, **dadurch gekennzeichnet, daß** die Kunststoffmaterial-Trennschicht (3) ist:
• ein auf Polypropylen basierendes Material, oder
• eine Koextrusion aus Polyethylen hoher Dichte und Polyethylen niedriger Dichte, mit der Seite niedriger Dichte in Kontakt mit der Fasermatte oder
• ein Doppellaminat aus PET oder Polypropylen mit Polyethylen.

14. Absorbierkissen nach einem der Ansprüche 8 bis 13, **dadurch gekennzeichnet, daß** die Trennschicht (3) an ihrer Innenseite, d.h. an ihrer in Kontakt mit der air-laid Fasermatte (1) befindlichen Seite, bedruckt ist.

15. Absorberkissen nach einem der Ansprüche 8 bis 14, **dadurch gekennzeichnet, daß** der Träger (2) ein synthetischer nicht gewebter Tissuestoff ist.

16. Absorberkissen nach einem der Ansprüche 8 bis 15, **dadurch gekennzeichnet, daß** die Trennschicht (3) mit der air-laid Fasermatte (1) verbunden ist, wobei sie auf die Fasermatte auflaminiert wurde, während die Fasermatte aufgebracht wird.

17. Absorberkissen nach einem der Ansprüche 8 bis 16, **dadurch gekennzeichnet, daß** die air-laid Fasermatte Zellstoffasern einschließt.

18. Verfahren zum Herstellen von Absorbierkissen nach einem der Ansprüche 8 bis 17 aus einem Kissenmaterial nach einem der Ansprüche 1 bis 7, wobei das Verfahren in den Schritten besteht:
Warmzusammenfügendes Komprimieren eines Streifens des Absorbierkissenmaterials (20,40,100,150) durch Applizieren aufgeheizter Bauteile (28,61, 62,103,104,152) an dem Träger und/oder der Trennschicht an streifenförmigen Bereichen zur Erzeugung von Absorbierkissen (30,74, 117,159), worin Fasern der Fasermatte festgehalten sind, und
Schneiden des Bandstreifens, um die Kissen (30,74,117,159) auszubilden.

19. Verfahren zum Herstellen von Absorbierkissen nach Anspruch 18, **dadurch gekennzeichnet, daß** die Kissen im Zentrum der komprimierten Streifen (5) geschnitten werden, wobei die Kompression in beiden benachbarten geschnittenen Kissen intakt bleibt.

20. Verfahren zum Herstellen von Absorbierkissen nach Anspruch 18 oder 19, **dadurch gekennzeichnet, daß** die Streifen mittels aufgeheizter, über die laminierte Fasermatte gerollter Rollen (26) oder mittels aufgeheizter, in die laminierte Fasermatte eingedrückter Werkzeuge (61,62,103,104,152) heißsiegelnd komprimiert werden.

21. Verfahren zum Herstellen von Absorbierkissen nach einem der Ansprüche 18 bis 20, **dadurch gekennzeichnet, daß** die Breite des Bandes (40,100) ein mehrfaches der Schnittgröße der Kissen (74,117) ist, wobei der Bandstreifen an Rändern des Bandstreifens entsprechend den Rändern des Kissens komprimiert ist und der Bandstreifen breitenweise und längsweise zwischen den Kissen geschnitten wird.

22. Verfahren zum Herstellen von Absorbierkissen nach einem der Ansprüche 18 bis 20, **dadurch gekennzeichnet, daß** die Breite des Bandes (150) gleich der Schnittgröße der Kissen (159) ist, wobei das Band an Rändern des Bandes entsprechend den Rändern der Kissen komprimiert ist und das Band breitenweise zwischen den Kissen geschnitten wird.

23. Verfahren zum Herstellen von Absorbierkissen nach einem der Ansprüche 18 bis 20, **dadurch gekennzeichnet, daß** die Breite des Bandes größer als ein mehrfaches der Schnittgröße der Kissen ist, wobei der Bandstreifen an Rändern des Bandstreifens entsprechend den Rändern der Kissen komprimiert ist und der Bandstreifen breitenweise zwischen den Kissen und längsweise zwischen den Kissen und an den Rändern der Kissen entlang der Länge des Bandstreifens geschnitten wird.

24. Verfahren zum Herstellen nach einem der Ansprüche 18 bis 23, aufweisend den Schritt von Anordnen und Befestigen geschnittener Kissen in Schalen (160).

25. Maschine zum Herstellen von Absorbierkissen nach einem der Ansprüche 8 oder 9 aus einem Streifen von Absorbierkissenmaterial nach Anspruch 1, wobei die Maschine aufweist:
Mittel (23,53,107,151) zum schrittweisen Zuführen des Bandes,
Mittel (28,61,62,103,104,152) zum Komprimieren des Streifens an Streifenbereichen, um die Kissen durch Heißverbinden des Materials der air-laid Fasermatte festzulegen, und Mittel (29,68,108,111,158) zum Schneiden des Bandstreifens an den Streifen.

26. Maschine nach Anspruch 25, **dadurch gekennzeichnet, daß** das Heißbindekomprimiermittel ein Paar aufgeheizter Andruckplatten aufweist, die erhobene Kompressionsstege (63) zum Festlegen der Streifen aufweisen, und Mittel (66,102,153) zum schrittweisen Zusammenrücken der Druckplatten zum Andrücken der Stege gegen den Bandstreifen aufweist, um die air-laid Fasermatte heißverbindend zu komprimieren.

27. Maschine nach Anspruch 25 oder 26, **dadurch gekennzeichnet, daß** das Zuführmittel ein Paar angetriebener Walzen (107,151) ist, zwischen deren Berührungslinie des Bandes stromabwärts der Andruckplatten durchläuft.

28. Maschine nach Anspruch 26 oder 26, **dadurch gekennzeichnet, daß** das zuführmittel ein Paar von Klemmbacken (54), schließbar gegen den Bandstreifen, ist und gekennzeichnet durch Mittel (55) zum Bewegen der Klemmbacken auf die Andruckplatten zu.

29. Maschine nach Anspruch 28, **dadurch gekennzeichnet, daß** das Bewegungsmittel Mittel (57) zum Bewegen der Klemmbacken ein wenig von den Andruckplatten mit Materialstreifen weg einschließt, um den Bandstreifen von den Druckplatten zu lösen, bevor die Klemmbacken wieder vorwärtsbewegt werden.

30. Maschine nach einem der Ansprüche 25 bis 29, **dadurch gekennzeichnet, daß** das Schneidmittel einen Satz von in das Material gegen eine Amboßplatte (67) vorrückbare Längsschneidmesser (68) aufweist.

31. Maschine nach Anspruch 30, **dadurch gekennzeichnet, daß** der Amboß Aussparungen aufweist und die Maschine Stempel (70) zum Drücken der geschnittenen Kissen durch die Aussparung aufweist.

32. Maschine nach einem der Ansprüche 25 bis 29, **dadurch gekennzeichnet, daß** das Schneidmittel zumindest ein Rollmesser (108) aufweist, das quer über den Streifen gegen einen Amboß (109) vorrückbar ist.

33. Maschine nach Anspruch 32 aufweisend eine Vakuumplatte (110), zumindest ein zweites Rollmesser (111) samt Amboß (112) zum Querschneiden des Bandstreifens und Mittel (113,115,116) zum Abtransportieren der geschnittenen Kissen von der Vakuumplatte, wobei das Transportmittel vorzugsweise eine zweite Platte ist.

34. Maschine nach Anspruch 31, wobei die Maschine aufweist: Mittel (155) zum Plazieren ausgeschnittener Kissen in Schalen und Mittel zum Befestigen der Kissen in den Schalen.

## Revendications

1. Matériau pour tampons absorbants comprenant : un support (2);
une nappe (1) appliquée par jet d'air sur le support, la nappe (1) contenant un matériau super-absorbant sous forme fibreuse et une fibre synthétique de liaison, et la nappe (1) étant réunie et fixée au support (2) par la fibre synthétique de liaison; et
une couche de détachement en matière plastique (3) située sur la face de la nappe (1), située à l'opposé du support (2),
dans lequel la matière plastique de la couche de détachement (3) est basée sur un polymère possédant un point de fusion qui est supérieur à celui d'au moins une couche superficielle de la fibre synthétique de liaison, ce qui a pour effet qu'en cours d'utilisation, ladite nappe (1) déposée par jet d'air peut être réunie par chauffage, sous la forme d'une structure comprimée, sur la périphérie d'un tampon devant être découpé à partir d'un matériau pour tampons, par application d'éléments chauffés sur le support et/ou sur la couche de détachement.

2. Matériau pour tampons absorbants selon la revendication 1, caractérisé en ce que la fibre synthétique de liaison de la nappe (1) est une fibre en polypropylène comportant un revêtement de polyéthylène.

3. Matériau pour tampons absorbants selon la revendication 1 ou la revendication 2, caractérisé en ce que la couche (3) de détachement en matière en plastique est formée par :
- un matériau à base de polypropylène, ou
- un produit coextrudé formé de polyéthylène haute densité et de polyéthylène basse densité, le côté basse densité étant en contact avec la nappe, ou
- un double stratifié de PET ou de polypropylène avec du polyéthylène.

4. Matériau pour tampons absorbants selon l'une quelconque des revendications précédentes, caractérisé en ce que la couche de détachement (3) est imprimée sur sa face intérieure, c'est-à-dire sa face en contact avec la nappe (1) appliquée par jet d'air.

5. Matériau pour tampons absorbants selpn l'une quelconque des revendications précédentes, caractérisé en ce que le support (2) est un non tissé synthétique.

6. Matériau pour tampons absorbants selon l'une quelconque des revendications précédentes, caractérisé en ce que la couche de détachement (3) est réunie à la nappe (1) appliquée par jet d'air, en étant déposée sur la nappe lorsque ladite nappe est appliquée.

7. Matériau pour tampons absorbants selon l'une quelconque des revendications précédentes, caractérisé en ce que la nappe (1) appliquée par jet d'air inclut une fibre de pâte de cellulose.

8. Tampon absorbant formé d'un matériau en forme de feuille, comprenant :
une couche de support (2);
une nappe (1) appliquée par jet d'air sur le support, la nappe (1) contenant un matériau super-absorbant sous forme fibreuse et une fibre synthétique de liaison, et la nappe (1) étant réunie et fixée au support (2) par la fibre synthétique de liaison; et
une couche de détachement en matière plastique (3) située sur la face de la nappe (1), située à l'opposé du support (2), la matière plastique de la couche de détachement (3) étant basée sur un polymère possédant un point de fusion qui est supérieur à celui d'au moins une couche superficielle de la fibre synthétique de liaison;
dans lequel au niveau des bords du tampon, les trois couches (2,1,3) sont comprimées dans un état plus mince que le reste du tampon, le matériau de la nappe appliquée par jet d'air étant réuni, sous la forme d'une structure comprimée, au moins au niveau des bords (4) du tampon, des fibres de la nappe étant retenues captives au niveau des bords.

9. Tampon absorbant découpé à partir d'une feuille d'un matériau, comprenant :
un support (2);
une nappe (1) appliquée par jet d'air sur le support, la nappe (1) contenant un matériau super-absorbant sous forme fibreuse et une fibre synthétique de liaison, et la nappe (1) étant réunie et fixée au support par la fibre synthétique de liaison; et
une couche de détachement en matière plastique (3) déposée sur la face de la nappe (1), située à l'opposé du support (2), la matière plastique de la couche de détachement (3) étant basée sur un polymère possédant un point de fusion qui est supérieur à celui d'au moins une couche superficielle de la fibre synthétique de liaison;
dans lequel au niveau des bords du tampon, les trois couches sont comprimées dans un état plus mince que le reste du tampon, le matériau de la nappe appliquée par jet d'air étant réuni, sous la forme d'une structure comprimée, au moins au niveau des bords découpés (4) du tampon, des fibres de la nappe étant retenues captives au niveau des bords découpés.

10. Tampon absorbant selon la revendication 8 ou la revendication 9, caractérisé en ce que le support (2), la nappe (1) appliquée par jet d'air et la couche de détachement (3) sont en outre scellées entre elles dans d'autres zones du tampon.

11. Tampon absorbant selon la revendication 8, la revendication 9 ou la revendication 10, caractérisé en ce que le rapport de l'épaisseur du reste du tampon à l'épaisseur des bords comprimés (4) est compris entre 9:1 et 2:1 et de préférence entre 7:1 et 3:1.

12. Tampon absorbant selon l'une quelconque de revendications 8 à 11, caractérisé en ce que la fibre synthétique de liaison de la nappe est une fibre de polypropylène possédant un revêtement de polyéthylène.

13. Tampon absorbant selon l'une quelconque des revendications 8 à 12, caractérisé en ce que la couche (3) de détachement en matière plastique est formée par :
- un matériau à base de polypropylène, ou
- un produit coextrudé formé de polyéthylène haute densité et de polyéthylène basse densité, le côté basse densité étant en contact avec la nappe, ou
- un double stratifié de PET ou de polypropylène avec du polyéthylène.

14. Tampon absorbant selon l'une quelconque des revendications 8 à 13, caractérisé en ce que la couche de détachement (3) est imprimée sur sa face intérieure, c'est-à-dire sa face en contact avec la nappe (1) appliquée par jet d'air.

15. Tampon absorbant selon l'une quelconque des revendications 8 à 14, caractérisé en ce que le support (2) est un non tissé synthétique.

16. Tampon absorbant selon l'une quelconque des revendications 8 à 15, caractérisé en ce que la couche de détachement (3) est réunie à la nappe (1) appliquée par jet d'air, en étant déposée sur la nappe lorsque ladite nappe est appliquée.

17. Tampon absorbant selon l'une quelconque des revendications 8 à 16, caractérisé en ce que la nappe (1) appliquée par jet d'air inclut une fibre de pâte de cellulose.

18. Procédé pour fabriquer des tampons absorbants selon l'une quelconque des revendications 8 à 17, à partir d'un matériau pour tampons tel que revendiqué selon l'une des revendications 1 à 7, le procédé comprenant les étapes consistant à :
comprimer, pour établir une liaison sous l'effet de la chaleur, une feuille du matériau pour tampons absorbants (20,40,100,150) par application d'éléments chauffés (28,61, 62,103,104,152) sur le support et/ou sur la couche de détachement sous la forme de bandes pour définir des tampons absorbants (30,74,117,159) dans lesquels des fibres de la nappe sont retenues captives, et
découper la feuille pour former des tampons (30,74,117,159).

19. Procédé pour fabriquer des tampons absorbants selon la revendication 18, caractérisé en ce que les tampons sont découpés au centre de bandes comprimés (5), ce qui a pour effet que la compression reste intact dans les deux tampons découpés adjacents.

20. Procédé pour fabriquer des tampons absorbants selon la revendication 18 ou la revendication 19, caractérisé en ce que les bandes sont comprimées pour l'établissement d'un scellement à chaud, au moyen de rouleaux chauffés (26) qui roulent sur la nappe stratifiée ou au moyen de matrices chauffées (61,62,103,104,152) imprimées ou enfoncées dans la nappe stratifiée.

21. Procédé pour fabriquer des tampons absorbants selon l'une quelconque des revendications 18 à 20, caractérisé en ce que la largeur de la feuille (40,100) est un multiple de la dimension de coupe des tampons (74,117), la feuille est comprimée au niveau de bords correspondant à des bords des tampons, et la feuille est découpée dans le sens de la largeur et dans le sens de la longueur entre les tampons.

22. Procédé pour fabriquer des tampons absorbants selon l'une quelconque des revendications 18 à 20, caractérisé en ce que la largeur de la feuille (150) est égale à la taille de découpage des tampons (159), que la feuille est comprimée au niveau de bords, qui correspondent à des bords du tampon et que la feuille est découpée dans le sens de la largeur entre les tampons.

23. Procédé pour fabriquer des tampons absorbants selon l'une quelconque des revendications 18 à 20, caractérisé en ce que la largeur de la feuille est supérieure à un multiple de la dimension de coupe des tampons, que la feuille est comprimée au niveau de bords qui correspondent à des bords des tampons et que la feuille est découpée dans le sens de la largeur entre les tampons et dans le sens de la longueur entre les tampons et au niveau des bords des tampons sur la longueur de la feuille.

24. Procédé de fabrication selon l'une quelconque des revendications 18 à 23, comprenant les étapes consistant à disposer et fixer des tampons découpés dans des bacs (160).

25. Machine pour fabriquer des tampons absorbants selon l'une quelconque des revendications 8 et 9, à partir d'une feuille d'un matériau pour tampons absorbants selon la revendication 1, la machine comprenant :
des moyens (23,53,107,151) pour faire avancer successivement ladite feuille,
des moyens (28,61,62,103,104,152) pour comprimer la feuille au niveau des bandes pour définir les tampons par liaison par chauffage du matériau de ladite nappe déposée par jet d'air, et
des moyens (29,68,108,111,158) pour découper la feuille au niveau des bandes.

26. Machine selon la revendication 25, caractérisée en ce que les moyens de liaison par chauffage comprennent un couple de plateaux chauffés (61,62,103,104,152) possédant des portées surélevées de compression (63) servant à définir lesdites bandes, et des moyens (66,102,153) pour rapprocher les plateaux pour appliquer les portées contre ladite feuille de manière à comprimer, en réalisant une liaison par chauffage, ladite nappe appliquée par jet d'air.

27. Machine selon la revendication 25 ou 26, caractérisée en ce que les moyens d'avance sont constitués par un couple de rouleaux entraînés (107,151), dans l'interstice desquels la feuille passe en aval des plateaux.

28. Machine selon la revendication 25 ou la revendication 26, caractérisée en ce que les moyens d'avance sont un couple de mâchoires (54) pouvant être fermées contre la feuille et des moyens (55) pour déplacer les mâchoires en direction des plateaux.

29. Machine selon la revendication 28, caractérisée en ce que les moyens de déplacement incluent des moyens (57) pour écarter légèrement les mâchoires des plateaux avec la feuille avant qu'ils avancent à nouveau pour libérer la feuille des plateaux.

30. Machine selon l'une quelconque des revendications 25 à 29, caractérisée en ce que les moyens de coupe comprennent un ensemble de lames de coupe longitudinales (68) qui peuvent avancer dans le matériau à l'encontre d'une plaque formant enclume (67).

31. Machine selon la revendication 30, caractérisée en ce que l'enclume comporte des découpes et que la machine comprend des pistons (70) servant à repousser les tampons découpés à travers les découpes.

32. Machine selon l'une quelconque des revendications 25 à 29, caractérisée en ce que les moyens de coupe comprennent au moins un couteau rotatif (108) pouvant avancer en travers de la feuille contre d'une enclume (109).

33. Machine selon la revendication 32, comprenant une plaque à dépression (110), au moins un second couteau roulant (111) et une enclume (112) pour découper la feuille transversalement et des moyens (113,115,116) pour transférer les tampons découpés à partir de la plaque à dépression, les moyens de transfert étant de préférence une seconde plaque.

34. Machine selon la revendication 31, cette manière comprenant :
des moyens (155) pour placer des tampons découpés dans des bacs, et
des moyens pour fixer les tampons dans les bacs.
